# EUROPÄISCHE PATENTSCHRIFT

(11) **EP 2 077 472 B1**
(45) Veröffentlichungstag und Bekanntmachung des Hinweises auf die Patenterteilung: **19.01.2011**
(21) Anmeldenummer: 09156805.5
(22) Anmeldetag: 15.06.2001
(51) Int. Cl.: G05B 19/042, G05B 19/414, G05B 19/408

(54) **Verfahren und Vorrichtung zur seriellen Datenübertragung zwischen einem Positionsmesssystem und einer Verarbeitungseinheit**
Method and device for serial data transmission between a position measuring system and a processing unit
Méthode et dispositif de transmission sérielle de données entre un système de mesure de position et une unité de traitement

(30) Priorität: 21.06.2000 DE 10030358
(43) Veröffentlichungstag der Anmeldung: 08.07.2009
(62) Teilanmeldung aus: 06009502.3
(73) Patentinhaber: Dr. Johannes Heidenhain GmbH, 83301 Traunreut (DE)
(72) Erfinder: Wastlhuber, Robert, 84518 Garching/Alz (DE); Strasser, Erich, 83308 Trostberg (DE); Eisenberger, Christian, 83324 Ruhpolding (DE); Bratzdrum, Erwin, 83359 Hallabruck (DE)

(56) Entgegenhaltungen:
- EP-A- 0 660 209
- EP-A- 0 989 701
- US-A- 5 371 859
- KENNEL R ET AL: "DATENKOMMUNIKATION UEBER DAS BUSSYSTEM SERCOS INTERFACE" AUTOMATISIERUNGSTECHNISCHE PRAXIS - ATP, OLDENBOURG VERLAG. MUNCHEN, DE, Bd. 33, Nr. 7, 1. Juli 1991 (1991-07-01), Seiten 363-368, XP000243095 ISSN: 0178-2320

## Beschreibung

Die vorliegende Erfindung betrifft ein Verfahren zur seriellen Datenübertragung zwischen einem Positionsmesssystem und einer Verarbeitungseinheit. Ferner betrifft die vorliegende Erfindung eine Vorrichtung zur seriellen Datenübertragung zwischen einem Positionsmesssystem und einer Verarbeitungseinheit..

Ein Verfahren bzw. eine Vorrichtung zur seriellen Datenübertragung zwischen einem Positionsmesssystem und einer Verarbeitungseinheit ist aus der EP 0 660 209 B1 der Anmelderin bekannt. In dieser Druckschrift wird die bidirektionale, serielle Übertragung von Positionsdaten und weiteren Daten bzw. Zusatzdaten zwischen einem Positionsmesssystem und einer nachgeordneten Verarbeitungseinheit auf einer Datenleitung vorgeschlagen. Als weitere Daten werden beispielsweise spezifische Parameter des jeweiligen Positionsmesssystems ausgetauscht, wie Daten bzgl. des Messsystem-Typs, der Signalperiode, der Referenzmarkenlage uvm.. Sowohl die Positionsdaten als auch die weiteren Daten werden über die Datenleitung als digitale Datenwörter übertragen. Die Übertragung von Positionsdaten oder weiteren Daten an die Verarbeitungseinheit erfolgt jeweils auf einen entsprechenden Anforderungsbefehl der Verarbeitungseinheit hin. Im Fall der angeforderten Übertragung umfangreicher Zusatzdaten hat dies zur Folge, dass während der Übertragung dieser Daten auf Seiten der Verarbeitungseinheit keine Positionsdaten zur Verfügung stehen. Für eine ggf. geforderte hochdynamische digitale Regelung auf Basis der Positionsdaten des Positionsmesssystems können sich aufgrund des starren Übertragungsrasters und der daraus resultierenden beschränkten Übertragungsgeschwindigkeit Probleme ergeben.

Aufgabe der vorliegenden Erfindung ist es daher, ein Verfahren sowie eine Vorrichtung zur seriellen Datenübertragung zwischen einem Positionsmesssystem und einer Verarbeitungseinheit anzugeben, das eine zuverlässige hochdynamische Regelung auf Basis der Positionsdaten des Positionsmesssystems ermöglicht. Des Weiteren soll auch ein ständiger Austausch weiterer Daten zwischen der Verarbeitungseinheit und dem Positionsmesssystem möglich sein.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Ferner wird die oben aufgeführte Aufgabe durch eine Vorrichtung mit den Merkmalen des Anspruches 10 gelöst.

Vorteilhafte Ausführungsformen der erfindungsgemäßen Vorrichtung ergeben sich aus den Maßnahmen, die in den von Anspruch 10 abhängigen Patentansprüchen aufgeführt sind.

Die erfindungsgemäßen Maßnahmen gewährleisten nunmehr, dass auch im Fall schneller Regelungszyklen aktuelle Positionsdaten des Positionsmesssystems auf Seiten der Verarbeitungseinheit zur Verfügung stehen. Des Weiteren ist der neben der Übertragung von Positionsdaten auch der Austausch weiterer Daten zwischen Verarbeitungseinheit und Positionsmesssystem möglich. Dies kann sichergestellt werden, da auch im Fall hochdynamischer Regelungen der Datenaustausch nicht ausschließlich in der Übertragung von Positionsdaten besteht. Erfindungsgemäß werden deshalb die zu übertragenden Daten in zeitkritische Daten und zeitunkritische Daten aufgeteilt. Insbesondere die Positionsdaten sowie die zugehörigen Positions-Anforderungsbefehle stellen dabei zeitkritische Daten dar, die insbesondere für eine schnelle Lageregelung erforderlich sind; die weiteren Daten in Form von Zusatzdaten und Zusatzdaten-Befehlen hingegen stellen zeitunkritische Informationen dar, deren Verarbeitung in deutlich größeren Zykluszeiten möglich ist. Ferner wird anstelle eines starren Anforderungs-Antwort-Übertragungsrasters nunmehr lediglich sichergestellt, dass die Positions-Anforderungsbefehle und die Positionsdaten reaktionsschnell auf Seiten des Positionsmesssystems bzw. der Verarbeitungseinheit zur Verfügung stehen. Es ist nicht mehr zwingend, dass auf einen Zusatzdaten-Befehl unmittelbar im Gegenzug die angeforderten Zusatzdaten übertragen werden. Die Übertragung der angeforderten Zusatzdaten kann vielmehr auch deutlich später erfolgen. Hierbei ist lediglich sicherzustellen, dass die später übertragenen Daten zu dieser Anforderung auf Seiten der Verarbeitungseinheit eindeutig identifizierbar sind bzw. zugeordnet werden können. Es ist erfindungsgemäß auch möglich, die zu einer Anfrage gehörenden Zusatzdaten in mehreren, zeitlich nicht-zusammenhängenden Zusatzdaten-Blöcken zu übertragen.

Als weiterer Vorteil der vorliegenden Erfindung ist anzuführen, dass prinzipiell jederzeit über einen entsprechenden Positionsdaten-Anforderungsbefehl die aktuellen Positionsdaten vom Positionsmesssystem an die Auswerteeinheit übertragbar sind. Dies ist kann beispielsweise auch im Fall der aktuellen Übertragung zeitunkritischer Daten, die gerade als kontinuierlicher Datenstrom übertragen werden. Bei der angeforderten Übertragung aktueller Positionsdaten ist dieser Datenstrom jederzeit unterbrechbar; nach der angeforderten Übertragung der zeitkritischen Positionsdaten läuft anschließend wieder die Übertragung der zeitunkritischen Daten weiter etc..

Es ist möglich die vorliegende Erfindung derart auszubilden, dass für jede Übertragungsrichtung ein separater Datenkanal vorgesehen wird, d.h. zwei getrennte Datenkanäle für einen Vollduplex-Betrieb einzusetzen.

Vorteilhaft ist ferner, dass verschiedene Positionsdaten-Anforderungsbefehle existieren können, denen unterschiedliche Abarbeitungsprioritäten zugeordnet werden. So ist es z.B. möglich, mit höchster Priorität die Übertragung von aktuellen Positionsdaten an die Verarbeitungseinrichtung anzufordern, die dort zur hochdynamischen Positionsregelung genutzt werden. Mit niedrigerer Abarbeitungspriorität kann ein zweiter Positionsdaten-Anforderungsbefehl vorgesehen werden, der die Übertragung der aktuellen Positionsdaten an die Verarbeitungseinrichtung anfordert, die dort zur Digitalisierung einer Werkstückkontur verwendet wird. Ein derartiger Positionsdaten-Anforderungsbefehl kann z.B. durch den Antastimpuls eines Tastsystems ausgelöst werden, mit dem ein Werkstück abgetastet wird. Grundsätzlich kann auch die Übertragung von Positionsdaten mit niedrigeren Abarbeitungsprioritäten durch Positionsdaten-Anforderungsbefehle mit höheren Abarbeitungsprioritäten unterbrochen werden.

Insgesamt gewährleisten die erfindungsgemäßen Maßnahmen somit eine Übertragung von Positionsdaten an die Verarbeitungseinheit mit hoher Geschwindigkeit bzw. mit höchster Priorität derselben. Gleichzeitig ist jedoch auch die Übertragung weiterer zeitunkritischer Daten im Rahmen der seriellen Datenübertragung möglich. Des Weiteren ist zu erwähnen, dass dies mit einem geringen Aufwand im Hinblick auf die erforderliche Verkabelung möglich ist.

Die vorliegende Erfindung ist ferner unabhängig von der physikalischen Ausbildung einer entsprechenden Schnittstelle und kann auf Basis verschiedenster Schnittstellenkonzepte realisiert werden.

Weitere Vorteile sowie Einzelheiten der vorliegenden Erfindung ergeben sich aus der nachfolgenden Beschreibung der beiliegenden Figuren.

Dabei zeigt
- Figur 1: eine schematisierte Darstellung eines Teiles ei- nes Übertragungsprotokolles zur Erläuterung ei- ner ersten Variante des erfindungsgemäßen Verfahrens;
- Figur 2a - 2d: jeweils in schematischer Form den grundsätzli- chen Aufbau verschiedener zeitkritischer und zeitunkritischer Datenwörter;
- Figur 3a - 3c: anhand von zwei Beispielen den zeitlichen Ablauf der Datenübertragung von der Auswerteeinheit zum Positionsmesssystem im Fall einer Anforde- rung von Positionsdaten während der laufenden Übertragung zeitunkritischer Daten;
- Figur 4: ein stark schematisiertes Blockschaltbild einer Ausführungsform der erfindungsgemäßen Vor- richtung.

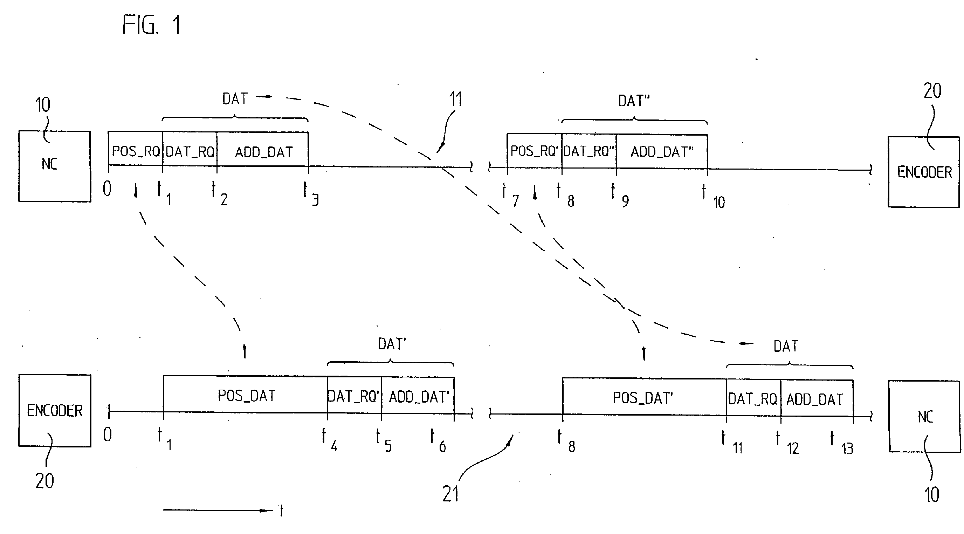

Anhand von Figur 1 sei nachfolgend eine erste Ausführungsform des erfindungsgemäßen Verfahrens bzw. der erfindungsgemäßen Vorrichtung erläutert. Dargestellt ist in Figur 1 in schematischer Form hierbei ein zeitlicher Ausschnitt aus der seriellen Datenübertragung zwischen einem Positionsmesssystem (ENCODER) 20 und einer Verarbeitungseinheit (NC) 10. Im oberen Teil der Figur 1 sind die von der Verarbeitungseinheit 10 an das Positionsmesssystem übertragenen Daten dargestellt; im unteren Teil der Figur 1 sind die im gleichen Zeitintervall vom Positionsmesssystem 20 an die Verarbeitungseinheit 20 übertragenen Daten dargestellt. Als Positionsmesssystem 20 kann z.B. ein bekanntes absolutes oder inkrementales Messsystem vorgesehen sein, welches an einer Werkzeugmaschine zur hochpräzisen Erfassung der Position eines Maschinenteiles dienen. Als Verarbeitungseinheit 10 fungiert in diesem Fall dann eine übliche numerische Werkzeugmaschinensteuerung, die auf Basis der erhaltenen Daten die Werkstückbearbeitung steuert bzw. kontrolliert.

Anhand des in Figur 1 dargestellten ersten Ausführungsbeispiels wird nachfolgend eine Vollduplex-Variante der vorliegenden Erfindung erläutert. Dies bedeutet, dass zwei separate Datenkanäle 11, 21 zur Datenübertragung vorgesehen sind. Ein erster Datenkanal 21 dient zur seriellen Übertragung von Daten vom Positionsmesssystem 20 zur Verarbeitungseinheit 10; ein zweiter Datenkanal 11 ist zur seriellen Übertragung von Daten von der Verarbeitungseinheit 10 zum Positionsmesssystem 20 hin vorgesehen. Die jeweiligen Daten werden in bekannter Art und Weise als digitale Datenwörter mit vorgegebener Größe in den beiden Datenkanälen 11, 21 übertragen. In einer möglichen Ausführungsform erfolgt die Übertragung von Datenwörtern mit einer Wortlänge von 10 Bit.

Im Zusammenhang mit den beiden Datenkanälen 11, 21 sei an dieser Stelle darauf hingewiesen, dass es im Rahmen der vorliegenden Erfindung nicht weiter wesentlich ist, wie diese physikalisch tatsächlich ausgebildet sind. Es ist vielmehr möglich, die vorliegende Erfindung auf Basis physikalisch unterschiedlicher serieller Schnittstellenkonzepte zu realisieren.

In einer möglichen Ausführungsform sind zwei separate Datenkanäle vorgesehen, die jeweils als verdrillte Zweidraht-Leitungen ausgebildet sind, über die die jeweiligen Daten als Takt- und Gegentaktsignale übertragen werden. Gleichzeitig erfolgt über diese Leitungen auch die Spannungs- und Stromversorgung der Positionsmesssystems.
Alternativ hierzu wäre aber auch möglich, das Positionsmesssystem über separate Leitungen zu versorgen; ebenso wäre eine Datenübertragung über Lichtwellenleiter denkbar usw..

Im dargestellten zeitlichen Ausschnitt des Datenaustausches zwischen der Verarbeitungseinheit 10 und dem Positionsmesssystem 20 übermittelt zum Zeitpunkt t = 0 die Verarbeitungseinheit 10 einen Positions-Anforderungsbefehl POS_RQ über den zweiten Datenkanal 11 an das Positionsmesssystem 20. Ein derartiger Positions-Anforderungsbefehl POS_RQ kann etwa durch ein Positions-Anforderungssignal der Positionsregelung ausgelöst werden. An die darauf erfolgende Übertragung des Positions-Anforderungsbefehl POS_RQ durch die Verarbeitungseinheit 20 schließt sich auf dem zweiten Datenkanal 11 umgehend die Übertragung weiterer Daten DAT an, beginnend zum Zeitpunkt t = t₁ und beendet zum Zeitpunkt t = t₃.

Wichtig ist im Rahmen der vorliegenden Erfindung nunmehr, dass die Verarbeitung der auf den Positions-Anforderungsbefehl POS_RQ folgend übertragenen weiteren Daten DAT auf der jeweiligen Gegenseite zeitunkritisch ist. Dies bedeutet, dass eine Bearbeitung dieser weiteren Daten DAT und/oder eine entsprechende Antwort hierauf nicht unmittelbar nach der Übertragung derselben erfolgen muss, sondern auch mit einem bestimmten zeitlichen Versatz Δt erfolgen kann. Mit höchster zeitlicher Priorität erfolgt hingegen die Verarbeitung bzw. Bearbeitung des zuerst übertragenen Positions-Anforderungsbefehls POS_RQ. Das Positionsmesssystem 20 beginnt demzufolge nahezu unmittelbar bzw. so schnell wie möglich nach dem Empfang des Positions-Anforderungsbefehls POS_RQ zum Zeitpunkt t = t₁ auf dem ersten Datenkanal 21 mit der Übertragung der Positionsdaten POS_DAT; beispielsweise wird hierbei die aktuelle Absolutposition als digitales Datenwort an die Verarbeitungseinheit 10 übertragen. Zum Zeitpunkt t = t₄ ist die Übertragung der Positionsdaten POS_DAT abgeschlossen, anschließend erfolgt auch auf dem ersten Datenkanal 21 analog zum zweiten Datenkanal 11 die Übertragung weiterer Daten DAT', deren Verarbeitung auf der Gegenseite wiederum zeitlich unkritisch ist.

Im Rahmen des Übertragungsschemas der vorliegenden Erfindung erfolgt somit eine Aufteilung der übertragenen Daten zwischen dem Positionsmesssystem 20 und der Verarbeitungseinheit 10 in zeitkritische Daten und Befehle einerseits und zeitunkritische Daten und Befehle andererseits. Die Übertragung zeitkritischer Daten bzw. die Abarbeitung von Befehlen im Zusammenhang mit zeitkritischen Daten hat hierbei immer Vorrang vor der Übertragung bzw. Abarbeitung zeitunkritischer Daten und Befehle.
Als zeitkritische sind diejenigen Daten und Befehle zu betrachten, die im unmittelbaren Zusammenhang mit der aktuell erfassten Position des Positionsmesssystems 20 stehen und die auf Seiten der Verarbeitungseinheit 10 für eine hochdynamische Regelung schnell zur Verfügung stehen müssen. Im einzelnen handelt es sich im vorliegenden Beispiel um die von der Verarbeitungseinheit 10 übertragenen Positions-Anforderungsbefehle POS_RQ sowie die als Antwort vom Positionsmesssystem 20 hierauf übertragenen Positionsdaten POS DAT. Als Positionsdaten POS_DAT können sowohl Absolutpositionsdaten als auch Inkrementalpositionsdaten übertragen werden.
Als zeitunkritische sind hingegen diejenigen ausgetauschten Daten und Befehle zu betrachten, die nicht im unmittelbaren Zusammenhang mit den aktuellen Positionsdaten stehen, wie beispielsweise Daten und/oder Parameter des Positionsmesssystems, Referenzierungsinformationen; Temperatur-Messwerte, Diagnosedaten uvm.. Im einzelnen wird auf diese Art der übertragenen zeitunkritischen Daten DAT, DAT' nachfolgend noch weiter eingegangen. Im Zusammenhang mit den weiteren zeitunkritischen Daten DAT, DAT' ist anzuführen, dass etwa auf einen eventuellen Befehl im Zusammenhang mit diesen Daten grundsätzlich nicht nötig ist, dass der entsprechende Befehl umgehend abgearbeitet wird; es ist vielmehr auch möglich, dass eine Bearbeitung dieses Befehles später erfolgen kann.

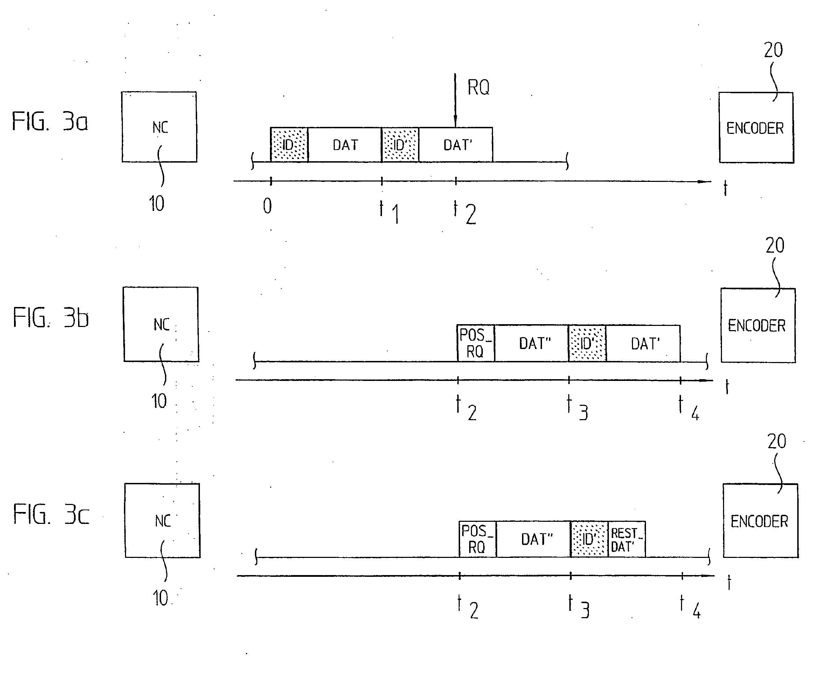

Im vorliegenden Beispiel umfassen die ausgetauschten zeitunkritischen Daten DAT, DAT' bis zum Zeitpunkt t = t₆ im einzelnen die Zusatzdaten ADD_DAT, ADD_DAT' sowie die Zusatzdaten-Befehle DAT_RQ, DAT_RQ'. Aufgrund einer derartigen Aufteilung der ausgetauschten Daten ist es auch möglich, dass eine laufende Übertragung zeitunkritischer Daten DAT, DAT' vom Positionsmesssystem 20 zur Verarbeitungseinheit 10 in Form eines kontinuierlichen Datenstromes durch einen Positions-Anforderungsbefehl POS_RQ von der Verarbeitungseinheit 10 unterbrochen wird und nahezu umgehend auf diesen Positions-Anforderungsbefehl POS_RQ eine Übertragung von aktuellen Positionsdaten POS_DAT an die Verarbeitungseinheit 10 erfolgt. Die derart unterbrochene Übertragung zeitunkritischer Daten DAT, DAT' wird zu einem späteren Zeitpunkt fertig gestellt. Das entsprechende Vorgehen wird im Verlauf der Beschreibung der Figuren 3a - 3c noch eingehend erläutert.

Ebenso ist es auch ohne eine derartige Unterbrechung der Übertragung zeitunkritischer Daten DAT, DAT' möglich, zusammengehörende Daten DAT, DAT' über mehrere Blöcke zeitlich verteilt zu übertragen, die in bestimmten Abständen aufeinander folgen und zwischen denen dann wiederum aktuelle Positionsdaten POS_DAT übertragen werden. Eine derartige Verteilung auf mehrere Blöcke kann etwa im Fall besonders umfangreicher zu übertragender zeitunkritischer Daten DAT nötig bzw. sinnvoll sein.

Im dargestellten Beispiel der Figur 1 werden als zeitunkritische Daten DAT, DAT' folgend auf die jeweiligen zeitkritischen Daten in Form von Positions-Anforderungsbefehl POS_RQ und Positionsdaten POS_DAT jeweils ein Zusatzdatenbefehl DAT_RQ, DAT_RQ' bzw. Zusatzdaten ADD_DAT, ADD_DAT' übertragen. Die weiteren zeitunkritischen Daten DAT, DAT' sind demzufolge im vorliegenden Beispiel in Zusatzdaten ADD_DAT, ADD_DAT' und Zusatzdaten-Befehle DAT_RQ, DAT_RQ' zu unterteilen. Bei den Zusatzdaten-Befehlen DAT_RQ, DAT_RQ' kann es sich beispielsweise um die Anforderung bestimmter Zusatzdaten ADD_DAT, ADD_DAT' von der jeweiligen Gegenseite handeln. So kann etwa die Verarbeitungseinheit 10 über einen entsprechenden Zusatzdaten-Befehl DAT_RQ vom Positionsmesssystem 20 bestimmte Messsystem-Parameter als Zusatzdaten ADD_DAT anfordern etc..

Als Zusatzdaten-Befehle DAT_RQ, DAT_RQ' können neben den erwähnten Anforderungsbefehlen auch noch weitere Befehle vorgesehen sein, beispielsweise Befehle im Zusammenhang mit der Programmierung oder Kalibrierung eines Positionsmesssystems usw..

Im Beispiel der Figur 1 überträgt die Verarbeitungseinheit 10 ab dem Zeitpunkt t = t₁, d.h. nach der Übertragung des Positions-Anforderungsbefehles POS_RQ, einen Zusatzdaten-Befehl DAT_RQ an das Positionsmesssystem 20, mit dem z.B. Zusatzdaten wie die Temperatur T des Positionsmesssystems 20 angefordert werden. Sobald die Übertragung des Zusatzdaten-Befehles DAT_RQ zum Zeitpunkt t = t₂ beendet ist, erfolgt durch die Verarbeitungseinheit 10 die Übertragung von Zusatzdaten ADD_DAT an das Positionsmesssystem 20 bis zum Zeitpunkt t = t₃. Hierbei kann es sich beispielsweise um Programmierungs-Parameter für das Positionsmesssystem 20 handeln.

Das Positionsmesssystem 20 antwortet nach dem Empfang des Positions-Anforderungsbefehles POS_RQ zum Zeitpunkt t = t₁ auf dem anderen Datenkanal 21 mit der unmittelbaren Übertragung der aktuellen Positionsdaten POS_DAT, die im Positionsmesssystem 20 zur Verfügung stehen. Dass es sich bei der Übertragung der Positionsdaten POS_DAT um die unmittelbare Antwort auf den vorhergehenden Positionsdaten-Anforderungsbefehl POS_RQ handelt sei durch die gestrichelte Verbindungslinie in Figur 1 angedeutet.
Sobald die aktuellen Positionsdaten POS_DAT zum Zeitpunkt t = t₄ vollständig übertragen sind, beginnt die Übertragung der zeitunkritischen Daten DAT' vom Positionsmesssystem 20 zur Verarbeitungseinheit 10. Zunächst wird hierbei im Zeitraum zwischen t = t₄ und t = t₅ ein Zusatzdaten-Befehl DAT_RQ' an die Verarbeitungseinheit 10 übertragen, im nachfolgenden Zeitintervall zwischen t = t₅ und t = t₆ erfolgt die Übertragung von Zusatzdaten ADD_DAT. Wesentlich ist an dieser Stelle, dass es sich bei der Übertragung der Zusatzdaten ADD_DAT' keineswegs um diejenigen Zusatzdaten handeln muss, die unmittelbar vorher von der Verarbeitungseinheit 10 mit dem Zusatzdaten-Befehl DAT_RQ auf dem anderen Datenkanal 11 angefordert wurden; es kann sich vielmehr um Zusatzdaten ADD_DAT' handeln, die bereits lange vorher von der Verarbeitungseinheit 10 angefordert wurden. Analog hierzu kann dann auch die Antwort des Positionsmesssystems 20 auf die Anforderung von Zusatzdaten im Zeitintervall t = t₁ und t = t₂ zu einem deutlich späteren Zeitpunkt t erfolgen. Im dargestellten Beispiel ist zur Erläuterung dieses Prinzips deshalb noch ein zweiter Teil der Zeitachse dargestellt, der ein später folgendes Zeitintervall nach dem ersten Datenaustausch-Intervall zwischen t₁ und t₆ darstellt. Im späteren Zeitintervall zwischen t = t₇ und t = t₁₃ erfolgt hierbei u.a. die Übertragung der zum Zeitpunkt t = t₁ angeforderten Zusatzdaten ADD_DAT. Auch hier ist durch die gestrichelte Verbindungslinie in der Figur 1 zwischen den Zusatzdaten DAT angedeutet, dass diese letztlich zusammengehören. Ansonsten verläuft der Datenaustausch in diesem Zeitintervall prinzipiell wie bereits oben erläutert.

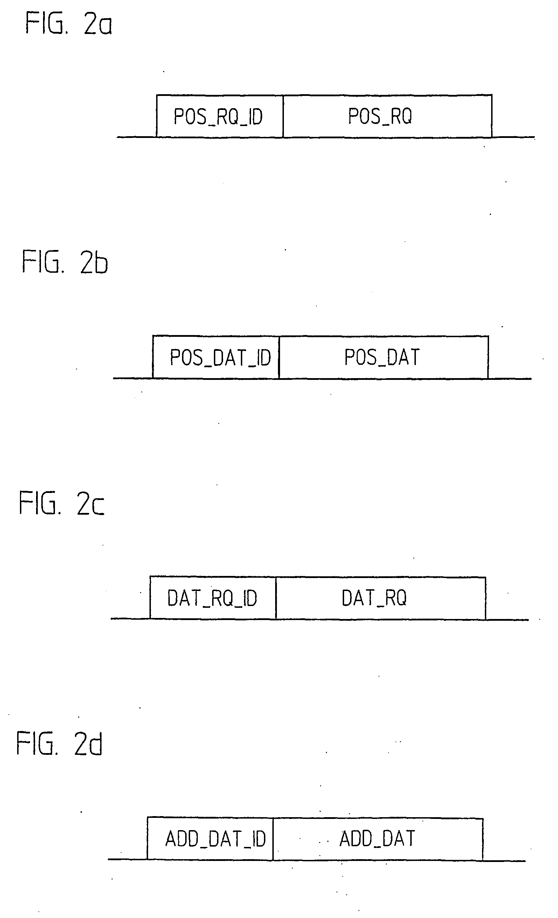

Anhand der Figuren 2a -2d sei nachfolgend die grundsätzliche Struktur der verschiedenen übertragenen digitalen Datenwörter erläutert, die im vorliegenden Beispiel als zeitkritische Daten bzw. zeitunkritische Daten übertragen werden.
Da zwischen der Verarbeitungseinheit und dem Positionsmesssystem auf den beiden Datenkanälen in der Regel ein kontinuierlicher Datenstrom in Form entsprechender digitaler Datenwörter ausgetauscht wird, ist es grundsätzlich erforderlich, die verschiedenen Arten der jeweiligen Datenwörter eindeutig zu identifizieren. Nur dann kann eine korrekte Verarbeitung der unterschiedlichen Datenwörter auf Seiten der Verarbeitungseinheit und des Positionsmesssystems sichergestellt werden. Aus diesem Grund ist vorgesehen vor jedem übertragenen Datenwort oder ggf. Datenpaket eine Identifizierungsinformation in Form einer spezifischen Datenwort-Kennung zu übertragen; über die Datenwort-Kennung wird jeweils der Beginn der nachfolgenden Daten sowie die Art der nachfolgenden Daten eindeutig für die jeweilige Gegenseite identifizierbar. Hierbei kann es sich bei den nachfolgenden Daten um einzelne digitale Datenwörter oder aber Datenpakete, bestehend aus einzelnen digitalen Datenwörtern handeln.
In den Figuren 2a - 2d ist jeweils schematisch veranschaulicht, wie sowohl vor den einzelnen zeitkritischen Daten POS_RQ, POS_DAT und den zeitunkritischen Daten DAT_RQ, ADD_DAT eine Datenwort-Kennung POS_RQ_ID, POS_DAT_ID, DAT_RQ_ID, ADD_DAT_ID übertragen wird. Auf eine Darstellung dieser zusätzlich vor dem jeweiligen Daten übertragenen Datenwort-Kennungen POS_RQ_ID, POS_DAT_ID, DAT_RQ_ID, ADD_DAT_ID wurde in Figur 1 im übrigen aus Übersichtlichkeitsgründen verzichtet. Anhand der jeweiligen Datenwort-Kennungen kann eine korrekte Verarbeitung bzw. Abarbeitung der übertragenen Daten auf beiden Seiten sichergestellt werden.

Da wie oben bereits erläutert, die Übertragung angeforderter zeitunkritischer Zusatzdaten ADD_DAT durchaus in einem größeren zeitlichen Abstand zur jeweiligen Anforderung über den Zusatzdaten-Befehl DAT_RQ erfolgen kann, muss des Weiteren sichergestellt werden, dass die übertragenen Zusatzdaten ADD_DAT auch als Antwort auf eine bestimmte vorhergehende Zusatzdaten-Anforderung erkennbar sind. Aus diesem Grund wird zu Beginn jedes übertragenen Datenwortes ADD_DAT oder ggf. Datenpaketes eine entsprechende Zuordnungsinformation mit den eigentlichen Zusatzdaten übertragen; dies kann etwa in Form einer einfachen Antwort-Nummer erfolgen, wenn der zugehörigen Frage eine entsprechende Frage-Nummer zugeordnet wurde. Selbstverständlich gibt es aber auch andere Möglichkeiten, die Zuordnungsinformationen zu übertragen bzw. eine eindeutige Zuordnung der übertragenen Zusatzdaten zu vorhergehenden Zusatzdaten-Anforderungen sicherzustellen.

Wie bereits oben angedeutet soll nunmehr anhand der Figuren 3a - 3c veranschaulicht werden, wie im Rahmen der vorliegenden Erfindung grundsätzlich zu jeder Zeit eine Unterbrechung eines kontinuierlichen Datenstromes erfolgen kann, in dem gerade zeitunkritische bzw. zeitunkritischere Daten übertragen werden.

Gezeigt ist in Figur 3a die aktuell laufende Übertragung zeitunkritischer Daten DAT, DAT' von der Verarbeitungseinheit (NC) 10 zum Positionsmesssystem (ENCODER) 20. Den entsprechenden zeitunkritischen Daten DAT, DAT' ist wie vorab erläutert jeweils eine zugehörige Datenwort-Kennung DAT_ID, DAT'_ID' vorgeordnet, um die Art der entsprechenden zeitunkritischen Daten DAT, DAT' auf Seiten des Positionsmesssystems 20 eindeutig zu identifizieren.
Während die Übertragung des ersten Blockes zeitunkritischer Daten DAT inklusive Datenwort-Kennung DAT_ID im Zeitintervall zwischen t = t₀ und t = t₁ noch vollständig erfolgt, wird die Übertragung des nachfolgenden Blockes zeitunkritischer Daten DAT' zum Zeitpunkt t = t₂ unterbrochen. Dies erfolgt über das schematisch angedeutete Positions-Anforderungssignal RQ, mit dem z.B. ein Lageregelungskreis in der Verarbeitungseinheit 10 aktuelle Positionsdaten vom Positionsmesssystem 20 anfordert. Unmittelbar nach dem Eintreffen des Positions-Anforderungssignales RQ wird gemäß Figur 3b daher die laufende Übertragung der zeitunkritischen Daten DAT' abgebrochen und stattdessen ein Positions-Anforderungsbefehl POS_RQ inklusive zugehöriger - nicht dargestellter - Datenwort-Kennung an das Positionsmesssystem 20 übertragen. Das Positionsmesssystem 20 antwortet ebenso umgehend mit der - nicht dargestellten - Übertragung der aktuell erfassten Positionsdaten, wie dies anhand von Figur 1 bereits erläutert wurde. Von der Verarbeitungseinheit 10 werden im Anschluss an die Übertragung des Positions-Anforderungsbefehles POS_RQ gemäß dem erfindungsgemäßen Übertragungsschema weitere zeitunkritische Daten DAT" an das Positionsmesssystem 20 übertragen. Des Weiteren ist es nunmehr noch erforderlich, die zum Zeitpunkt t = t₂ abgebrochene Übertragung des zeitunkritischen Datenwortes DAT' zu vervollständigen. Gemäß der Variante in Figur 3b erfolgt dies, indem im Zeitintervall zwischen t = t₃ und t = t₄ nochmals vollständig die entsprechenden Daten DAT' inklusive Datenwort-Kennung DAT'_ID' an das Positionsmesssystem 20 übertragen werden.

Alternativ zu diesem Vorgehen wäre es aber - wie in Figur 3c veranschaulicht - möglich, im Zeitintervall zwischen t = t₃ und t = t₄ lediglich den restlichen Teil REST_DAT' der zeitunkritischen Daten DAT' zu übertragen, deren vollständige Übertragung zum Zeitpunkt t = t₂ unterbrochen wurde.

Wie anhand dieses Beispieles erläutert, kann somit zu jeder Zeit ein kontinuierlicher Datenstrom mit zeitunkritischen Daten DAT, DAT' zwischen der Verarbeitungseinheit 10 und dem Positionsmesssystem 20 unterbrochen werden, um zeitkritische Positionsdaten anzufordern, die z.B. für eine hochdynamische Lageregelung erforderlich sind.

Im Rahmen der vorliegenden Erfindung ist es des Weiteren möglich, Positionsdaten POS_DAT zur Verarbeitung in der Verarbeitungseinheit 10 mit bestimmten Abarbeitungsprioritäten vom Positionsmesssystem 20 anzufordern. So können etwa in einer als Werkzeugmaschinensteuerung ausgebildeten Verarbeitungseinheit 10 Positionsdaten einerseits zur Lageregelung und andererseits zur Digitalisierung einer Werkstückkontur benötigt werden. Letzteres erfolgt üblicherweise mit Hilfe eines Tastsystems, das die jeweilige Werkstückkontur abtastet und im Fall eines erzeugten Antastsignales die aktuellen Positionsdaten POS_DAT des Tastsystems an die Verarbeitungseinheit 10 übermittelt. Die aktuellen Positionsdaten werden hierbei über das Positionsmesssystem 20 bestimmt. Während die Positionsdaten POS_DAT für die Lageregelung insbesondere im Fall einer hochdynamischen Regelung äußerst schnell zur Verfügung stehen müssen, ist eine Weiterverarbeitung der Positionsdaten POS_DAT zur Digitalisierung einer Werkstückkontur weniger zeitkritisch. Aus diesem Grund kann in der vorliegenden Erfindung vorgesehen werden, mehrere Positions-Anforderungsbefehle POS_RQⁿ vorzusehen (n = 1, 2....), denen unterschiedliche Abarbeitungsprioritäten zugeordnet sind. So ist beispielsweise ein erster Positions-Anforderungsbefehl POS_RQ¹ vorgesehen, der mit höchster Abarbeitungspriorität eine Übertragung von Positionsdaten POS_DAT an die Verarbeitungseinheit 10 veranlasst, die dort zur Positions- oder Lageregelung verwendet werden. Des Weiteren existiert mindestens ein zweiter Positions-Anforderungsbefehl POS_RQ², der mit niedrigerer Abarbeitungspriorität eine Übertragung der aktuellen Positionsdaten POS_DAT an die Verarbeitungseinheit 10 veranlasst, die dann dort zur Digitalisierung einer Werkstückkontur verwendet werden.

Die den verschiedenen Positions-Anforderungsbefehlen POS_RQⁿ zugewiesenen Abarbeitungsprioritäten haben zur Folge, dass derart eine nochmalige Prioritäts-Differenzierung in der Positionsabfrage bzw. Positionsdaten-Übertragung möglich ist. So kann beispielsweise die gerade laufende Übertragung von Positionsdaten POS_DAT zur Verarbeitungseinheit 10 unterbrochen werden, die dort zur Digitalisierung benötigt werden und vorher mit dem niedrigprioren Positions-Anforderungsbefehl POS_RQ² angefordert wurden. Die Unterbrechung erfolgt hierbei durch den entsprechenden Positions-Anforderungsbefehl POS_RQ¹, der die höchste Abarbeitungspriorität aufweist und eine umgehende Übertragung von Positionsdaten POS_DAT für die Positionsregelung in der Verarbeitungseinheit 10 veranlasst.

Selbstverständlich können auch mehr als zwei Positions-Anforderungsbefehle POS_RQⁿ mit entsprechenden Abarbeitungsprioritäten versehen werden usw..

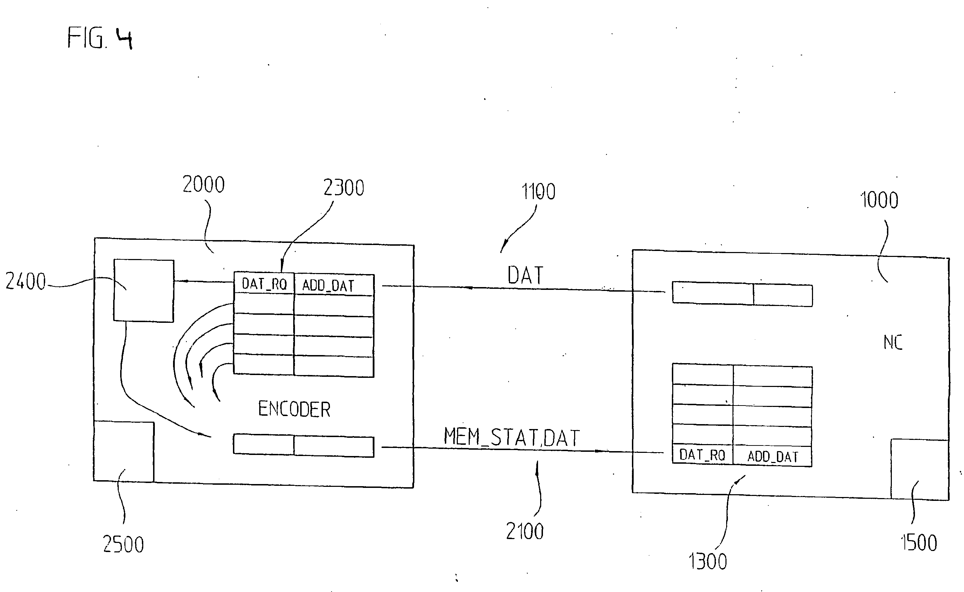

Abschließend seien anhand von Figur 4 nunmehr noch einige Einzelheiten in Bezug auf die erfindungsgemäße Vorrichtung erläutert, die insbesondere im Zusammenhang mit der Übertragung der zeitunkritischen Daten von Bedeutung sind. Figur 4 zeigt hierbei in stark schematisierter Form eine Vollduplex-Variante der erfindungsgemäßen Vorrichtung mit einigen noch näher zu erläuternden Komponenten derselben, die insbesondere für die vorliegende Erfindung relevant sind.

Die erfindungsgemäße Vorrichtung umfasst wiederum ein Positionsmesssystem (ENCODER) 2000 sowie eine nachgeordnete Verarbeitungseinheit (NC) 1000, die abgesehen von den nachfolgend erläuterten Komponenten einen üblichen Aufbau aufweisen. Der Datentransfer zwischen dem Positionsmesssystem 2000 und der Verarbeitungseinheit 1000 erfolgt über zwei separate Datenkanäle 1100, 2100. Über den ersten Datenkanal 2100 werden Daten vom Positionsmesssystem 2000 zur Verarbeitungseinheit 1000 übertragen; auf dem zweiten Datenkanal 1100 erfolgt die Datenübertragung in entgegengesetzter Richtung, d.h. von der Verarbeitungseinheit 1000 zum Positionsmesssystem 2000.

Bevor anschließend auf die Erläuterung weiterer Details im Zusammenhang mit der Übertragung der zeitunkritischen Daten DAT eingegangen wird, sei an dieser Stelle auf eine schematisch angedeutete Steuereinheit 2500 im Positionsmesssystem 2000 hingewiesen. Deren wesentliche Aufgabe ist es, den erfindungsgemäßen Datentransfer wie oben erläutert sowie die interne Verarbeitung der unterschiedlichen Daten im Positionsmesssystem 2000 zu synchronisieren bzw. zu steuern. Bei der Steuereinheit 2500 kann es sich etwa um einen Prozessor oder aber um eine geeignete Logikschaltung handeln.

Analog hierzu umfasst selbstverständlich auch die Verarbeitungseinheit 1000 eine entsprechende Steuereinheit 1500, die u.a. den Datentransfer bzw. die Datenverarbeitung wie oben erläutert steuert. In der Regel ist die Steuereinheit 1500 auf Seiten der Verarbeitungseinheit 1000 als Prozessor ausgebildet.

Auf Seiten des Positionsmesssystems 2000 ist schematisiert ferner eine erste Speichereinheit 2300 dargestellt, die zur Abspeicherung der von der Verarbeitungseinheit 1000 übertragenen zeitunkritischen Daten DAT dient, die wie oben erläutert aus den Zusatzdaten ADD_DAT und den Zusatzdaten-Befehlen DAT_RQ bestehen. Eine derartige Abspeicherung der verschiedenen empfangenen zeitunkritischen Daten DAT ist insofern nötig, als deren Bearbeitung bzw. Abarbeitung in der Regel nicht umgehend erfolgen muss. Die während der Übertragung empfangenen Zusatzdaten ADD_DAT und Zusatzdaten-Befehle DAT_RQ werden daher in der Speichereinheit 2300 im Positionsmesssystem 2000 abgespeichert und je nach Priorität und Zeitaufwand für die Bearbeitung abgearbeitet. Beispielsweise kann es sich hierbei um die Anforderung von Systemparametern des Positionsmesssystems 2000 handeln, die in einem weiteren Speicherbaustein 2400 in Form eines EEPROMS im Positionsmesssystem 2000 abgelegt sind. Die angeforderten Parameter werden aus dem Speicherbaustein 2400 ausgelesen, was im Falle eines EEPROMS in der Regel relativ langsam erfolgt und anschließend über die vorher erläuterte Art und Weise an die Verarbeitungseinheit 1000 übertragen. Parallel hierzu kann auf Seiten des Positionsmesssystems 2000 die Abarbeitung weiterer zeitunkritischer Anfragen bzw. Anforderungen erledigt werden, die allesamt in der Speichereinheit 2300 abgespeichert sind; hierbei kann es sich z.B. um die Abfrage von Temperaturmesswerten, Beschleunigungsmesswerten etc. handeln.

Nach der entsprechenden Abarbeitung werden die zeitunkritischen Daten DAT wie oben beschrieben an die Verarbeitungseinheit 1000 übertragen und dort ebenfalls in einer geeigneten zweiten Speichereinheit 1300 abgespeichert. Die Verarbeitung der Daten in der Speichereinheit 1300 kann dann auch in der Verarbeitungseinheit je nach Dringlichkeit bzw. Priorität dieser Daten über entsprechende Prozesse erfolgen, die in geeigneter Art und Weise softwaremäßig realisiert sind.

Die Speichereinheiten 2300, 1300 auf Seiten des Positionsmesssystems 2000 bzw. der Verarbeitungseinheit 1000 weisen einen Aufbau auf, der der Struktur der übertragenen zeitunkritischen Daten DAT entspricht. Dies bedeutet, dass für jeden übertragenen Datensatz der zeitunkritischen Daten DAT ein erster Speicherbereich für die Zusatzdaten ADD_DAT sowie ein zweiter Speicherbereich für die Zusatzdaten-Befehle DAT_RQ vorgesehen ist. Die entsprechenden Speicherbereiche müssen hinsichtlich ihrer Größe selbstverständlich auf die Größe der entsprechenden Datenwörter der zeitunkritischen Daten DAT abgestimmt werden.

Zu erwähnen ist im Zusammenhang mit den Speichereinheiten 1300, 2300 ferner, dass im Rahmen der erfindungsgemäßen Datenübertragung neben den oben erläuterten Daten des Weiteren noch Speichereinheits-Zustandsdaten MEM_STAT regelmäßig zwischen dem Positionsmesssystem 2000 und der Verarbeitungseinheit 1000 übertragen werden. Hierbei handelt es sich um Informationen in Bezug auf die jeweilige Speichereinheit 1300, 2300. Zumindest umfassen die Speichereinheits-Zustandsdaten MEM_STAT hierbei Informationen bzgl. des aktuellen Speicherzustandes, d.h. etwa ob die jeweilige Speichereinheit 1300, 2300 voll, leer oder teilweise gefüllt ist usw.. Dies ist insbesondere bei der Speichereinheit 2300 des Positionsmesssystems 2000 von Bedeutung, da auf Seiten der Verarbeitungseinheit 1000 im Fall einer vollen Speichereinheit 2300 keine weiteren Daten DAT mehr in Richtung des Positionsmesssystems 2000 übertragen werden können. Aufgrund der regelmäßigen Übertragung der Speichereinheits-Zustandsdaten MEM_STAT kann somit sichergestellt werden, dass die jeweilige Gegenseite keine derartigen Daten DAT mehr überträgt, wenn die entsprechende Speichereinheit 1300, 2300 voll ist.

Im Rahmen der vorliegenden Erfindung existieren neben den erläuterten Ausführungsformen selbstverständlich auch noch alternative Varianten.

## Patentansprüche

1. Verfahren zur seriellen Datenübertragung zwischen einem Positionsmesssystem (20; 2000) und einer Verarbeitungseinheit (10; 1000), wobei
- vom Positionsmesssystem (20; 2000) Positionsdaten (POS_DAT, POS_DAT') und weitere Daten (DAT, DAT') in serieller Form an die Verarbeitungseinheit (10; 1000) übertragen werden,
- die vom Positionsmesssystem (20; 2000) zur Verarbeitungseinheit (10; 1000) übertragenen Daten über einen ersten Datenkanal (21; 2100) übertragen werden und die von der Verarbeitungseinheit (10; 1000) an das Positionsmesssystem (20; 2000) übertragenen Daten über einen zweiten Datenkanal (11; 1100) übertragen werden,
- die übertragenen Daten in zeitkritische Daten und Befehle einerseits und zeitunkritische weitere Daten und Befehle andererseits aufgeteilt werden, wobei die Positionsdaten (POS_DAT, POS_DAT') sowie die Positions-Anforderungsbefehle (POS_RQ, POS_RQ') zeitkritische Daten (POS_DAT, POS_DAT'; POS_RQ, POS_RQ') darstellen und Zusatzdaten (DAT, DAT') sowie Zusatzdaten-Befehle (DAT_RQ, DAT_RQ') zeitunkritische weitere Daten (DAT_RQ, DAT_RQ'; DAT, DAT') darstellen,
- von der Verarbeitungseinheit (10; 100; 1000) zur Anforderung von Positionsdaten (POS_DAT, POS_DAT') ein zeitkritischer Positions-Anforderungsbefehl (POS_RQ, POS_RQ') an das Positionsmesssystem (20; 200; 2000) übertragen wird und auf den zeitkritischen Positions-Anforderungsbefehl (POS_RQ. POS_RQ') folgend weitere Daten (DAT, DAT") von der Verarbeitungseinheit (10; 100; 1000) an das Positionsmesssystem (20; 200; 2000) übertragen werden, deren Verarbeitung zeitunkritisch ist, wobei zusammengehörende zeitunkritische Daten (DAT, DAT") über mehrere zeitlich nicht-zusammenhängende Zusatzdaten-Blöcke zeitlich verteilt übertragen werden, die in bestimmten Abständen aufeinander folgen.

2. Verfahren nach Anspruch 1, wobei die Positionsdaten (POS_DAT) als digitale Datenwörter mit einer vorgegebenen Wortlänge oder als Datenpakete bestehend aus digitalen Datenwörtern übertragen werden.

3. Verfahren nach Anspruch 1, wobei auf Seiten des Positionsmesssystems (2000) die von der Verarbeitungseinheit (1000) übertragenen zeitunkritischen Daten (DAT_RQ, ADD_DAT) in einer ersten Speichereinheit (2300) im Positionsmesssystem (2000) abgespeichert werden.

4. Verfahren nach Anspruch 1, wobei auf Seiten der Verarbeitungseinheit (1000) die vom Positionsmesssystem (2000) übertragenen zeitunkritischen Daten (DAT_RQ, ADD_DAT) in einer zweiten Speichereinheit (1300) in der Verarbeitungseinheit (1000) abgespeichert werden.

5. Verfahren nach Anspruch 1, wobei Speichereinheits-Zustandsdaten (MEM_STAT) vom Positionsmesssystem (2000) an die Verarbeitungseinheit (1000) übertragen werden, die zumindest Informationen bzgl. des aktuellen Speicherzustandes der ersten Speichereinheit (2300) im Positionsmesssystem (2000) umfassen.

6. Verfahren nach Anspruch 2, wobei in Verbindung mit jedem übertragenen digitalen Datenwort oder Datenpaket eine Datenwort-Kennung (POS_RQ_ID, POS_DAT_ID, DAT_RQ_ID, ADD_DAT_ID) übertragen wird, die den Beginn und die Art des jeweils zugehörigen Datenwortes oder Datenpaketes eindeutig identifiziert.

7. Verfahren nach Anspruch 1, wobei als weitere Daten (DAT, DAT') Zusatzdaten-Befehle an das Positionsmesssystem (20; 200; 2000) übertragen werden.

8. Verfahren nach Anspruch 7, wobei über die Zusatzdaten-Befehle Zusatzdaten vom Positionsmesssystem (20; 200; 2000) angefordert werden.

9. Verfahren nach Anspruch 7, wobei über die Zusatzdaten-Befehle Systemparameter des Positionsmesssystems (20; 200; 2000) angefordert werden.

10. Vorrichtung zur seriellen Datenübertragung zwischen einem Positionsmesssystem (20; 2000) und einer Verarbeitungseinheit (10; 1000), wobei
- vom Positionsmesssystem (20; 2000) eine Übertragung von Positionsdaten (POS_DAT, POS_DAT') und weiteren Daten (DAT, DAT') an die Verarbeitungseinheit (10; 1000) erfolgt,
- zur Übertragung der Daten zwischen dem Positionsmesssystem (20; 2000) und der Verarbeitungseinheit (10; 1000) zwei separate Datenkanäle (11; 21) vorgesehen sind, von denen ein erster Datenkanal (21) zur Übertragung von Daten in einer Richtung nutzbar ist und ein zweiter Datenkanal (11) zur Übertragung von Daten in der entgegengesetzten Richtung nutzbar ist,
- eine Aufteilung der übertragenen Daten in zeitkrititsche Daten und Befehle einerseits und in zeitunkrititsche weitere Daten und Befehle andererseits erfolgt, wobei die Positionsdaten (POS_DAT, POS_DAT') sowie die Positions-Anforderungsbefehle (POS_RQ, POS_RQ') zeitkritische Daten (POS_DAT, POS_DAT'; POS_RQ, POS_RQ') darstellen und Zusatzdaten (DAT, DAT') sowie Zusatzdaten-Befehle (DAT_RQ, DAT_RQ') zeitunkrititsche weitere Daten (DAT, DAT'; DAT_RQ, DAT_RQ') darstellen,
- auf Seiten der Verarbeitungseinheit (1000) eine Steuereinheit (1500) angeordnet ist, die zur Anforderung von Positionsdaten eine Übertragung eines zeitkritischen Positions-Anforderungsbefehles (POS_RQ) an das Positionsmesssystem (2000) veranlasst und auf die Übertragung des zeitkritischen Positions-Anforderungsbefehles (POS_RQ) folgend die Übertragung weiterer Daten (DAT) veranlasst, deren Verarbeitung zeitunkritisch ist, wobei zusammengehörende zeitunkritische Daten (DAT, DAT') über mehrere zeitlich nicht-zusammenhängende Zusatzdaten-Blöcke zeitlich verteilt übertragen werden, die in bestimmten Abständen aufeinander folgen.

11. Vorrichtung nach Anspruch 10, wobei auf Seiten des Positionsmesssystems (2000) eine erste Speichereinheit (2300) angeordnet ist, die zur Abspeicherung der von der Verarbeitungseinheit (1000) übertragenen zeitunkritischen Daten (DAT) dient.

12. Vorrichtung nach Anspruch 10, wobei auf Seiten der Verarbeitungseinheit (1000) eine zweite Speichereinheit (1300) angeordnet ist, die zur Abspeicherung der vom Positionsmesssystem (2000) übertragenen zeitunkritischen Daten (DAT) dient.

13. Vorrichtung nach Anspruch 10, wobei die Steuereinheit (1500) auf Seiten der Verarbeitungseinheit (1000) als Prozessor ausgebildet ist.

## Claims

1. A method for a serial data transfer between a position measuring system (20; 2000) and a processing unit (10; 1000), wherein
- position data (POS_DAT, POS_OAT') and further data (DAT, DAT') are transferred by the position measuring system (20; 2000) to the processing unit (10; 1000) in a serial manner,
- the data, which are transferred from the position measuring system (20; 2000) to the processing unit (10; 1000), are transferred via a first data channel (21; 2100) and the data, which are transferred from the processing unit (10; 1000) to the position measuring system (20; 2000), are transferred via a second data channel (11; 1100),
- the transferred data are divided into time-critical data and commands on the one hand and into time-uncritical further data and commands on the other hand, wherein the position data (POS_DAT, POS_DAT') as well as the position request commands (POS_RQ, POS_RQ') represent time-critical data (POS_DAT, POS_DAT'; POS_RQ, POS_RQ') and supplementary data (DAT, DAT') as well as supplementary data commands (DAT_RQ, DAT_RQ') represent time-uncritical further data (DAT_RQ, DAT_RQ'; DAT, DAT'),
- a time-critical position request command (POS_RQ, POS_RQ') is transferred from the processing unit (10; 100; 1000) to the position measuring system (20; 200; 2000) for requesting position data (POS_DAT, POS_DAT') and, following the time-critical position request command (POS_RQ, POS_RQ'), further data (DAT, DAT") are transferred from the processing unit (10; 100; 1000) to the position measuring system (20; 200; 2000), the processing of which is time-uncritical, wherein time-uncritical data (DAT, DAT"), which belong together, are transferred in a temporally-distributed manner via a plurality of blocks of supplementary data, which are not connected in a temporal manner, which succeed one another in certain intervals.

2. The method according to claim 1, wherein the position data (POS_DAT) are transferred as digital data words comprising a predetermined word length or as data packets consisting of digital data words.

3. The method according to claim 1, wherein the time-uncritical data (DAT_RQ, ADD_OAT), which are transferred by the processing unit (1000), are stored in the position measuring system (2000) in a first storage unit (2300) on the side of the position measuring system (2000).

4. The method according to claim 1, wherein the time-uncritical data (DAT_RQ, ADD_DAT), which are transferred by the position measuring system (2000), are stored in the processing unit (1000) in a second storage unit (1300) on the side of the processing unit (1000).

5. The method according to claim 1, wherein storage unit status data (MEM_STAT) are transferred from the position measuring system (2000) to the processing unit (1000), which at least comprises information relating to the current storage state of the first storage unit (2300) in the position measuring system (2000).

6. The method according to claim 2, wherein, in connection with each transferred digital data word or data packet, a data word identifier (POS_RQ_ID, POS_DAT_ID, DAT_RQ_ID, ADD_DAT_ID) is transferred, which clearly identifies the beginning and the type of the respective corresponding data word or data packet.

7. The method according to claim 1, wherein supplementary data commands are transferred as further data (DAT, DAT') to the position measuring system (20; 200; 2000).

8. The method according to claim 7, wherein supplementary data are requested by the position measuring system (20; 200; 2000) via the supplementary data commands.

9. The method according to claim 7, wherein system parameters of the position measuring system (20; 200; 2000) are requested via the supplementary data commands.

10. A device for a serial data transfer between a position measuring system (20; 2000) and a processing unit (10; 1000), wherein
- the position measuring system (20; 2000) carries out a transfer of position data (POS_DAT, POS_DAT') and of further data (DAT, DAT') to the processing unit (10; 1000),
- provision is made for the transfer of the data between the position measuring system (20; 2000) and the processing unit (10; 1000) for two separate data channels (11; 21), a first data channel (21) of which can be used to transfer data in one direction and a second data channel (11) can be used to transfer data in the opposite direction,
- a division of the transferred data into time-critical data and commands on the one hand and into time-uncritical further data and commands on the other hand is carried out, wherein the position data (POS_DAT, POS_DAT') as well as the position request commands (POS_RQ, POS_RQ') represent time-critical data (POS_DAT, POS_DAT'; POS_RQ, POS_RQ') and supplementary data (DAT, DAT') as well as supplementary data commands (DAT_RQ, DAT_RQ') represent time-uncritical further data (DAT, DAT'; DAT_RQ, DAT_RQ'),
- arrangement is made on the side of the processing unit (1000) for a control unit (1500), which triggers a transfer of a time-critical position request command (POS_RQ) to the position measuring system (2000) for requesting position data and which, following the transfer of the time-critical position request command (POS_RQ), triggers the transfer of further data (DAT), the processing of which is time-uncritical, wherein time-uncritical data (DAT, DAT'), which belong together, are transferred in a temporally-distributed manner via a plurality of blocks of supplementary data, which are not connected in a temporal manner, which succeed one another in certain intervals.

11. The device according to claim 10, wherein a first storage unit (2300), which serves to store the time-uncritical data (DAT), which are transferred by the processing unit (1000), is arranged on the side of the position measuring system (2000).

12. The device according to claim 10, wherein a second storage unit (1300), which serves to store the time-uncritical data (DAT), which are transferred by the position measuring system (2000), is arranged on the side of the processing unit (1000).

13. The device according to claim 10, wherein the control unit (1500) on the side of the processing unit (1000) is embodied as a processor.

## Revendications

1. Procédé pour la transmission de données en série, entre un système de mesure de position (20, 2000) et une unité de traitement (10, 1000), dans lequel
- des données de position (POS_DAT, POS_DAT') et d'autres données (DAT, DAT') sont transmises sous forme sérielle à l'unité de traitement (10, 1000) par le système de mesure de position (20, 2000),
- les données transmises à l'unité de traitement (10, 1000) par le système de mesure de position (20, 2000) sont transmises par le biais d'un premier canal de données (21, 2100), et les données transmises au système de mesure de position (20, 2000) par l'unité de traitement (10, 1000) sont transmises par le biais d'un deuxième canal de données (11, 1100),
- les données transmises sont divisées en données et ordres temporellement critiques et en données et ordres non temporellement critiques, les données de position (POS_DAT, POS_DAT') ainsi que les ordres de requête (POS_RQ, POS_RQ') représentant des données temporellement critiques (POS_DAT, POS_DAT'; POS_RQ, POS_RQ'), et les données supplémentaires (DAT, DAT') ainsi que les ordres de données supplémentaires (DAT_RQ, DAT_RQ') représentant des autres données non temporellement critiques (DAT_RQ, DAT_RQ' ; DAT, DAT'),
- un ordre de requête temporellement critique (POS_RQ, POS_RQ') est transmis, pour la requête de données de position (POS_DAT, POS_DAT'), au système de mesure de position (20, 200, 2000) par l'unité de traitement (10, 100, 1000), et suivant l'ordre de requête de position (POS_RQ, POS_RQ') temporellement critique, d'autres données (DAT, DAT") sont transmises au système de mesure de position (20, 200, 2000) par l'unité de traitement (10, 100, 1000), dont le traitement n'est pas temporellement critique, où les données non temporellement critiques (DAT, DAT") associées dans le temps sont transmises de façon échelonnée dans le temps par plusieurs blocs de données supplémentaires non associés dans le temps, consécutifs par intervalles prédéfinis.

2. Procédé selon la revendication 1, dans lequel les données de position (POS_DAT) sont transmises en tant que mots contenant des données numériques, avec une longueur de mot prédéfinie, ou en tant que paquets de données constitués de mots contenant des données numériques.

3. Procédé selon la revendication 1, dans lequel, côté système de mesure de position (2000), les données non temporellement critiques (DAT_RQ, ADD_DAT) transmises par l'unité de traitement (1000) sont enregistrées dans une première mémoire (2300) dans le système de mesure de position (2000).

4. Procédé selon la revendication 1, dans lequel, côté unité de traitement (1000), les données non temporellement critiques (DAT_RQ, ADD_DAT) transmises par le système de mesure de position (2000) sont enregistrées dans une deuxième mémoire (1300) dans l'unité de traitement (1000).

5. Procédé selon la revendication 1, dans lequel des données d'état de la mémoire (MEM_STAT) sont transmises à l'unité de traitement (1000) par le système de mesure de position (2000), comprenant au moins des informations concernant l'état de mémoire actuel de la première mémoire (2300) dans le système de mesure de position (2000).

6. Procédé selon la revendication 2, dans lequel, en relation avec chaque mot contenant des données numériques ou paquet de données numériques transmis, un identifiant de mot contenant des données (POS_RQ_ID, POS_DAT_ID, DAT_RQ_ID, ADD_DAT_ID) est transmis, identifiant avec évidence le début et le genre du mot contenant des données ou du paquet de données associé.

7. Procédé selon la revendication 1, dans lequel des ordres de données supplémentaires sont transmis au système de mesure de position (20, 200, 2000) en tant qu'autres données (DAT, DAT').

8. Procédé selon la revendication 7, dans lequel des données supplémentaires sont requises par le système de mesure de position (20, 200, 2000) au moyen des ordres de données supplémentaires.

9. Procédé selon la revendication 7, dans lequel des paramètres de système du système de mesure de position (20, 200, 2000) sont requis au moyen des ordres de données supplémentaires.

10. Dispositif pour la transmission en série de données entre un système de mesure de position (20, 2000) et une unité de traitement (10, 1000), dans lequel
- des données de position (POS_DAT, POS_DAT') et d'autres données (DAT, DAT') sont transmises du système de mesure de position (20, 2000) vers l'unité de traitement (10, 1000),
- deux canaux de données séparés (11, 21) sont prévus pour la transmission des données entre le système de mesure de position (20, 2000) et l'unité de traitement (10, 1000), parmi lesquels un premier canal de données (21) sert à la transmission de données dans un sens, et un deuxième canal de données (11) sert à la transmission de données dans le sens opposé,
- les données transmises sont divisées en données et ordres temporellement critique d'une part et en autres données et ordres non temporellement critique d'autre part, les données de position (POS_DAT, POS_DAT') ainsi que les ordres de requête de position (POS_RQ, POS_RQ') représentant des données temporellement critiques (POS_DAT, POS_DAT' ; POS_RQ, POS_RQ'), et les données supplémentaires (DAT, DAT') ainsi que les ordres de données supplémentaires (DAT_RQ, DAT_RQ') représentant des autres données non temporellement critiques (DAT_RQ, DAT_RQ' ; DAT, DAT'),
- une unité de commande (1500) est disposée du côté de l'unité de traitement (1000), déclenchant la transmission d'un ordre de requête de position (POS_RQ) temporellement critique au système de mesure de position (2000) pour la requête de données de position, et déclenchant la transmission d'autres données (DAT) suite à la transmission de l'ordre de requête de position (POS_RQ) temporellement critique, dont le traitement est non temporellement critique, où les données non temporellement critiques (DAT, DAT") associées dans le temps sont transmises de façon échelonnée dans le temps par plusieurs blocs de données supplémentaires non associés dans le temps, consécutifs par intervalles prédéfinis.

11. Dispositif selon la revendication 10, dans lequel, côté système de mesure de position (2000), il est prévu une première mémoire (2300) servant à l'enregistrement des données non temporellement critique (DAT) transmises par l'unité de traitement (1000).

12. Dispositif selon la revendication 10, dans lequel, côté unité de traitement (1000), il est prévu une deuxième mémoire (1300) servant à l'enregistrement des données non temporellement critique (DAT) transmises par le système de mesure de position (2000).

13. Dispositif selon la revendication 10, dans lequel l'unité de commande (1500) côté unité de traitement (1000) est conçue comme un processeur.
